# EUROPEAN PATENT SPECIFICATION

(11) **EP 0 838 151 B1**
(45) Date of publication and mention of the grant of the patent: **12.12.2001**
(21) Application number: 97202939.1
(22) Date of filing: 25.09.1997
(51) Int. Cl.: A01K 1/06

(54) **Feeding fence**
Einsperrgitter
Cornadis

(30) Priority: 25.09.1996 NL 1004113
(43) Date of publication of application: 29.04.1998
(73) Proprietor: DE BOER STALINRICHTINGEN B.V., 8938 AV Leeuwarden (NL)
(72) Inventor: Hoekstra, Hains, 8926 NH Leeuwarden (NL); Roorda, Age Dirk, 9089 BK Wytgaard (NL)
(74) Representative: 't Jong, Bastiaan Jacob

(56) References cited:
- DE-A- 2 936 923
- DE-A- 2 944 701
- DE-B- 1 139 685

## Description

The present invention relates to a feeding fence for selectively providing animals such as cattle in a stall with access to fodder on a side of the feeding fence located opposite the animals, comprising:
- a fence of rods fixedly attached to each other, wherein the rods form at least one opening with dimensions wherein an animal can reach therethrough to consume the fodder;
- a movable bar which is connected in the opening to the fence by a hinge element and which bar is displaceable in the opening between at least a first position leaving clear the opening and a second or further third position, resp. closing the opening and an emergency position; and
- adjusting means, which exert a force on the movable bar, whereby the bar is forced toward the first, open position thereof.

Such feeding fences are known from the German "Offenlegungsschrift" DE-A-2,936,923, where the adjusting means comprise a system of cables and contra weights, where the cables are connected to the moveable bars. The contra weights have been arranged at the free end of the cables. The cables are arranged over a wheel, such that a moveable bar in the opening is pulled to the first, open position.

The feeding fence according to this prior art has for a disadvantage, that it is complicated and moreover very vulnerable as a result of the complex configuration of pulling cables and contra weights. The function thereof can easily be hindered. Further the configuration is detremental for animals, as between moving parts, such as the pulling cables, etc., the ears and other body parts of the animals can get stuck. Besides injuries to these body parts of the animals, the animals may react in a way, resulting in damage to the system of the feeding fence.

It is an object of the present application to at least decrease one of the above mentioned objections, and for this a feeding fence is provided, which is distinguished, in that the adjusting means comprise a body of resiliently compressible material, which body in the second or further third position of the bar is compressed between the bar on one side and the fixed fence on the other. In this configuration the body of compressible body pushes the moveable bar from the second closed position to the first open position in a very simple and elegant way. No extension or control elements are required outside the opening in which the moveable bar aid is arranged. Further tampering with the adjusting means by the animals is effectively prevented. The feeding fence according to the present application is very robust. The energy, which is accumulated in the body of compressible material, when this body is compressed between the moveable bar and the fixed fence, is subsequently released to swing the moveable bar to the desired first, open position. Thus the moveable bar is with certainty brought into the first, open position thereof. Also the solution provided by the present invention is very kind to animals, in that the number of moving parts in the feeding fence, between which the animals can get caught is considerably reduced. The only moveable object in the feeding fence, which actually needs to be moveable is the moveable bar.

In a preferred embodiment of a feeding fence according to the invention the body is arranged close to the hinge element. Thus the hinge element becomes a protection for the adjusting means against tampering by the animals. This feature is further enhanced in a feeding fence, wherein the hinge element comprises a bracket attached to a fixed rod of the fence, and wherein the body is arranged between the bracket, the rod and the bar and connects in close fitting manner thereto with a shape corresponding with the bar in the first, open position thereof. Thus the body of compressible material is effectively protected against tampering by the enclosure thereof within the above named components.

In this manner is prevented that from sheer boredom the animals are able to lick on the body of resiliently compressible material and in this way interfere with the operation of the body, the adjusting means or even remove them from the location described here. In one embodiment the fixing means comprise at least one flange which engages the bracket.

The invention will be further elucidated hereinbelow with reference to embodiments thereof. In the drawing:
fig. 1 shows a perspective view of a feeding fence according to the present invention;
fig. 2 shows a perspective view of an exploded detail of a fence in a first embodiment according to the present invention;
fig. 3 is a perspective view of a section through the detail shown in fig. 2 in the assembled situation; and
fig. 4 shows a perspective view of a detail of a second embodiment of a fence according to the present invention.

In the figures the same components are designated with the same reference numerals. The description of the feeding fences below is formulated in relation to cattle as the animals in the stall but the invention may also relate to a feeding fence in a stall for cows, sheep, goats and the like.

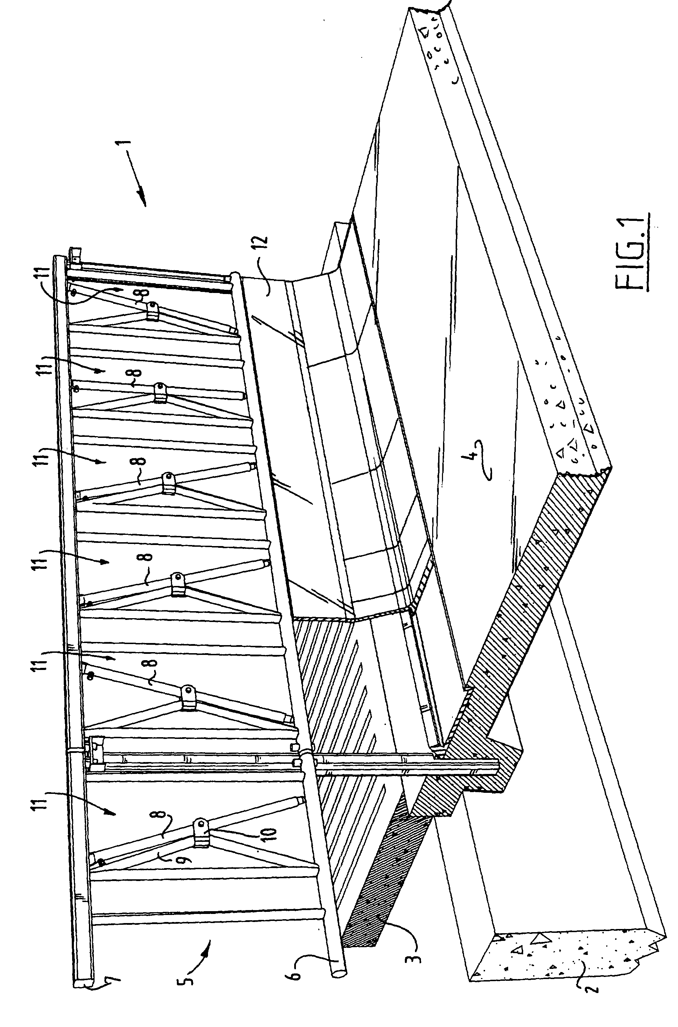

Fig. 1 shows a feeding fence 1 which substantially comprises a fence 5 with a lower beam 6, an upper beam 7 in which the locking means are also arranged, a swivel bar 8 and a fixed bar 9.

Fence 5 is arranged above a partition 12 which connects onto the feeding floor 4, wherein the stall floor 3 is located on the side of the fence 5 located opposite feeding floor 4. Stall floor 3 and feeding floor 4 both rest on a foundation 2. Fence 5 comprises a number of openings 11 through which a cow can only place its head in the position of the swivel bar 8 shown on the left of the drawing. In the other positions of swivel bar 8 the remaining portion of the opening 11 is either too small for placing of the head therethrough or this remaining portion, while being large enough for placing of the head therethrough, is situated on the underside of the opening at a position where a cow placing its head therethrough is not desired.

It is noted herein that the lower half of the fixed bar does not run vertically downward from a bracket 10 with which the swivel bar 8 is coupled to the fixed bar 9. On the contrary, the lower part of fixed bar 9 runs back down again whereby a third possible position of the swivel bar is realized. This is a so-called emergency position, wherein the head of a cow can be freed from the fence when the animal has lain down with its head placed through the fence 5 and cannot stand up again. The subject of the present invention is of importance at least for fences with two and three positions of the movable bar as well as other types.

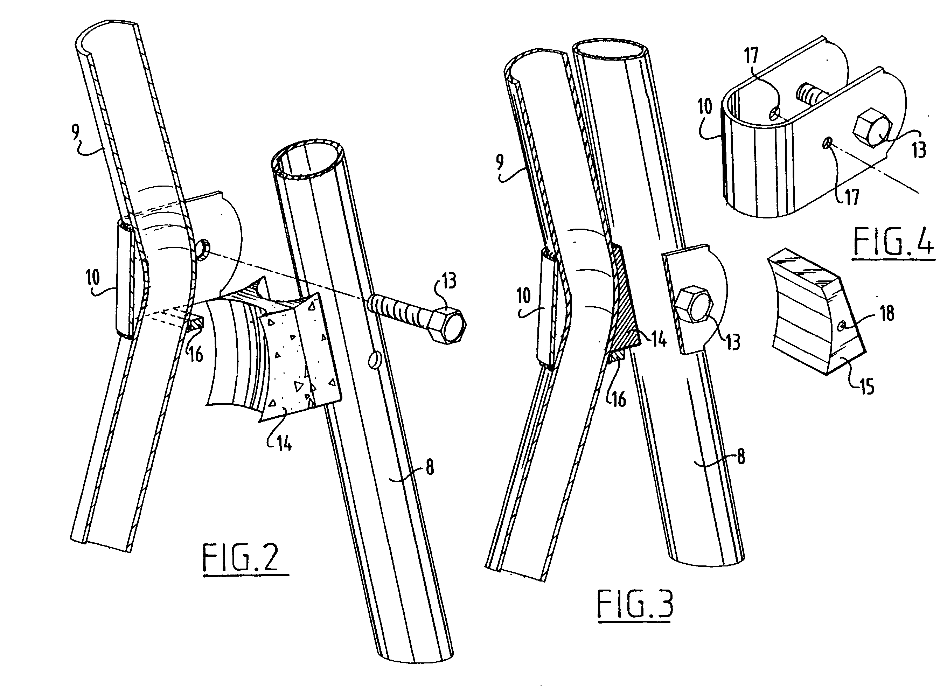

Fig. 2 shows a detail of a disassembled part of a fence according to the present invention. The part of the fence shown here substantially comprises the swivel bar 8, fixed bar 9, bracket 10, a hinge bolt 13 which is placed through the bracket 10 and around which the swivel bar 8 can swivel.

The adjusting means herein comprise an adjusting block 14 in a first embodiment thereof of a resiliently compressible material. In the embodiment shown here use is made for this purpose of rubber. Use can alternatively be made of cellular rubber, synthetic rubber, foam rubber, polystyrene foam, plastic, cork, wood, polyester, paper, hemp fibres, sponge or the like.

Of importance here is that adjusting block 14 has a form such that it connects in close-fitting manner at all times to the fixed bar 9 and connects close-fittingly to swivel bar 8 without exerting pressure when this latter is in the first position leaving clear the opening as shown in fig. 3. In any other position of swivel bar 8 the adjusting block 14 exerts a resetting force on swivel bar 8, under the influence of which the swivel bar 8 is pushed back to the first position thereof leaving clear the opening.

Arranged on the underside of bracket 10 is a mild-steel strip 16 which in the assembled situation is located beneath adjusting block 14. By way of addition such a mild-steel strip can also be arranged on the top of the bracket, whereby adjusting block 14 would be enclosed between mild-steel strip 16 and the mild-steel strip which is not shown. Both alternatives serve to prevent the adjusting block 14 from falling out of the bracket in particular positions of the swivel bar, this being possible after a certain time wherein some elasticity of adjusting block 14 is lost. This also prevents a cow from being able to lick on the adjusting block 14 due to boredom such that adjusting block 14 could be dislodged from bracket 10.

Fig. 3 shows in section the configuration illustrated in fig. 2 in the assembled situation thereof. It can clearly be seen here that when the swivel bar 8 in the upper half of the drawing moves away from fixed bar 9 and in the lower half of the drawing moves toward fixed bar 9, the adjusting block 14 will exert an opposing force on swivel bar 8 in order to return this latter to the first position thereof leaving clear the opening.

Shown schematically in fig. 4 is an alternative to the steps ensuring that the adjusting block, here designated with reference numeral 15, will remain at the position in bracket 10 between fixed bar 9 and swivel bar 8. A pin, screw or bolt (not shown) is inserted for this purpose through the holes 17 in bracket 10 and through the passage 18 in the adjusting block 15 and secured, thus ensuring this fixing of adjusting block 15.

Alternatively, such an adjusting block can also be provided with flanges which project over and under the legs of the bracket which enclose the adjusting block. In addition or alternatively, a pin-like fastening can also be inserted through the adjusting block, the fixed bar and the body of the U-shaped bracket to bring about a fixing in this direction. Embodiments of the present invention are described above wherein use is made of rubber and alternatives to rubber are mentioned. The invention is however not limited thereto. The present invention also comprises for instance steel springs, resiliently compressible pins etc. A body described as solid in the embodiment above can alternatively be hollow, wherein such cavities are for instance filled with air or alternatively with silicones, water, soft rubber, oil, jelly or the like.

Although a number of embodiments and alternatives are described above, the invention is not limited thereto.

## Claims

1. Feeding fence (1) for selectively providing animals such as cattle in a stall with access to fodder on a side (4) of the feeding fence located opposite the animals, comprising:
- a fence (5) of rods (6, 7, 9) fixedly attached to each other, wherein the rods form at least one opening (11) with dimensions wherein an animal can reach therethrough to consume the fodder;
- a movable bar (8) which is connected in the opening (11) to the fence (5) by a hinge element (10, 13) and which bar (8) is displaceable in the opening (11) between at least a first position leaving clear the opening and a second or further third position, resp. closing the opening and an emergency position; and
- adjusting means, which exert a force on the movable bar, whereby the bar is forced toward the first, open position thereof,
**characterized in that** the adjusting means comprise a body (14, 15) of resiliently compressible material, which body in the second or further third position of the bar (8) is compressed between the bar (8) on one side and the fixed fence (5) on the other.

2. Feeding fence as claimed in claim 1, **characterized in that** the body is arranged close to the hinge element (10, 13).

3. Feeding fence as claimed in claim 2, wherein the hinge element comprises a bracket (10) attached to a fixed rod (9) of the fence (5), **characterized in that** the body is arranged between the bracket (10), the rod (9) and the bar (8) and connects in close-fitting manner thereto with a shape corresponding with the bar (8) in the first, open position.

4. Feeding fence as claimed in claim 3, **characterized in that** the body comprises fixing means (18) for fixing thereof to at least one of the rod (9), the bracket (10) and the bar (8).

5. Feeding fence as claimed in claim 4, **characterized in that** the fixing means (16, 18) comprise at least one flange (16) which engages the bracket (10).

6. Feeding fence as claimed in any of the claims 2-5, **characterized in that** the body (14, 15) is manufactured from at least one of the materials cellular rubber, synthetic rubber, foam rubber, polystyrene foam, cork, polyester, paper, hemp fibres and sponge.

7. Feeding fence as claimed in any of the claims 2-6, **characterized in that** the body comprises a cavity.

8. Feeding fence as claimed in claim 7, **characterized in that** the cavity is filled with at least one of the materials silicones, water, soft rubber, oil and jelly.

## Patentansprüche

1. Einsperrgitter (1), mit dem wahlweise Tiere wie beispielsweise Vieh in einem Stall Zugang zu Futter an einer Seite (4) des Einsperrgitters verschafft wird, das den Tieren gegenüberliegt, mit
- einem Gitter (5) aus Stangen (6,7,9), die fest aneinander angebracht sind, wobei die Stangen zumindest eine Öffnung (11) ausbilden, mit Abmessungen, derart, daß ein Tier hindurch gelangen kann, um das Futter zu konsumieren;
- einer bewegbaren Stange (8), die in der Öffnung (11) über ein Scharnierelement (10,13) mit dem Gitter (5) verbunden ist, und wobei die Stange (8) in der Öffnung (11) versetzbar ist zwischen wenigstens einer ersten Stellung, in der die Öffnung offen gelassen ist, und einer zweiten oder weiteren dritten Stellung, die jeweils die Öffnung bzw. eine Notstellung schließen; und
- Einstellmitteln, die eine Kraft auf die bewegbare Stange ausüben, wobei die Stange in Richtung ihrer ersten, offenen Stellung, gezwungen ist, **dadurch gekennzeichnet, daß** die Einstellmittel einen Körper (14,15) aus elastisch komprimierbarem Material umfassen, wobei der Körper in der zweiten oder weiteren, dritten Stellung der Stange (8) zusammengedrückt ist zwischen der Stange (8) an einer Seite und dem fixierten Gitter (5) an der anderen.

2. Einsperrgitter nach Anspruch 1, **dadurch gekennzeichnet, daß** der Körper nahe dem Scharnierelement (10,13) angeordnet ist.

3. Einsperrgitter nach Anspruch 2, wobei das Scharnierelement einen Bügel (10) umfaßt, der an einer fixierten Stange (9) des Gitters (5) angebracht ist, **dadurch gekennzeichnet, daß** der Körper zwischen dem Bügel (10), der Stange (9) und der Stange bzw. Strebe (8) angeordnet ist und in engpassender Weise daran anschließt, mit einer Gestalt, welche der Stange (8) in der ersten, offenen Stellung, entspricht.

4. Sperrgitter nach Anspruch 3, **dadurch gekennzeichnet, daß** der Körper Fixiermittel (18) umfaßt für seine Fixierung an wenigstens entweder der Stange (9), dem Bügel (10) oder der Strebe (8).

5. Sperrgitter nach Anspruch 4, **dadurch gekennzeichnet, daß** die Fixiermittel (16,18) wenigstens einen Flansch (16) umfassen, der in Eingriff steht mit dem Bügel (10).

6. Sperrgitter nach einem der Ansprüche 2 bis 5, **dadurch gekennzeichnet, daß** der Körper (14,15) hergestellt ist aus zumindest einem der Materialien Schaumgummi, Kunstkautschuk, Zellgummi, Polystyrolschaumstoff, Kork, Polyester, Papier, Hanffaser und Schwamm.

7. Sperrgitter nach einem der Ansprüche 2 bis 6, **dadurch gekennzeichnet, daß** der Körper einen Hohlraum umfaßt.

8. Sperrgitter nach Anspruch 7, **dadurch gekennzeichnet, daß** der Hohlraum mit wenigstens einem der Materialien aus Silikonen, Wasser, Weichgummi, Öl und Gel, gefüllt ist.

## Revendications

1. Barrière d'alimentation (1) permettant de fournir d'une manière sélective à des animaux, tels que du bétail se trouvant dans un emplacement d'étable, un accès à des produits fourragers disposés d'un côté (4) de la barrière d'alimentation situé à l'opposé des animaux, comprenant :
- une barrière (5) de barreaux (6, 7, 9) fixés à demeure les uns aux autres, les barreaux formant au moins une ouverture (11) ayant des dimensions telles qu'un animal peu la traverser pour consommer les produits fourragers,
- une barre mobile (8) qui, dans l'ouverture (11), est reliée à la barrière (5) au moyen d'un élément d'articulation (10, 13), laquelle barre (8) est déplaçable dans l'ouverture (11) entre au moins une première position laissant l'ouverture dégagée et une deuxième ou encore une troisième position, respectivement fermant l'ouverture et une position de secours, et
- des moyens de réglage qui exercent une force sur la barre mobile, de sorte que la barre est repoussée de force vers sa première position, ouverte,
**caractérisée en ce que** les moyens de réglage comprennent un corps (14, 15) en matière élastiquement comprimable, lequel corps est comprimé, dans la deuxième ou encore troisième position de la barre (8), entre la barre (8) d'un côté et la barrière fixe (5) de l'autre.

2. Barrière d'alimentation telle que revendiquée à la revendication 1, **caractérisée en ce que** le corps est disposé près de l'élément d'articulation (10, 13).

3. Barrière d'alimentation telle que revendiquée à la revendication 2, dans laquelle l'élément d'articulation comprend une ferrure (10) fixée à un barreau fixe (9) de la barrière (5), **caractérisée en ce que** le corps est disposé entre la ferrure (10), le barreau (9) et la barre (8) et se raccorde en adaptation étroite à celle-ci avec une forme correspondant à la barre (8) dans la première position, ouverte.

4. Barrière d'alimentation telle que revendiquée à la revendication 3, **caractérisée en ce que** le corps comprend des moyens de fixation (18) pour sa fixation à au moins l'un des éléments constitués par le barreau (9), la ferrure (10) et la barre (8).

5. Barrière d'alimentation telle que revendiquée à la revendication 4, **caractérisée en ce que** les moyens de fixation (16, 18) comprennent au moins un rebord (16) qui coopère avec la ferrure (10).

6. Barrière d'alimentation telle que revendiquée dans l'une quelconque des revendications 2 à 5, **caractérisée en ce que** le corps (14, 15) est réalisé en au moins l'une des matières : caoutchouc alvéolé, caoutchouc synthétique, caoutchouc mousse, mousse de polystyrène, liège, polyester, papier, fibres de chanvre et éponge.

7. Barrière d'alimentation telle que revendiquée dans l'une quelconque des revendications 2 à 6, **caractérisée en ce que** le corps comprend une cavité.

8. Barrière d'alimentation telle que revendiquée à la revendication 7, **caractérisée en ce que** la cavité est remplie d'au moins l'une des matières : silicones, eau, caoutchouc souple, huile et gelée.
